# EUROPÄISCHE PATENTSCHRIFT

(11) **EP 2 440 354 B1**
(45) Veröffentlichungstag und Bekanntmachung des Hinweises auf die Patenterteilung: **04.09.2013**
(21) Anmeldenummer: 10722645.8
(22) Anmeldetag: 08.06.2010
(51) Int. Cl.: B23B 51/02

(54) **BOHRER**
DRILL
FORET

(30) Priorität: 08.06.2009 DE 102009025223
(43) Veröffentlichungstag der Anmeldung: 18.04.2012
(73) Patentinhaber: MAPAL Fabrik für Präzisionswerkzeuge Dr. Kress KG, 73431 Aalen (DE)
(72) Erfinder: KRENZER, Ulrich, 90513 Zirndorf (DE); MARZ, Peter, 89165 Dietenheim (DE)
(74) Vertreter: Gleiss, Alf-Olav
(86) Internationale Anmeldenummer: PCT/EP2010/003417
(87) Internationale Veröffentlichungsnummer: WO 2010/142411

(56) Entgegenhaltungen:
- WO-A2-2009/090042
- DE-A1- 10 337 985
- JP-A- 59 161 208
- "PERCAGE, FORAGE, ALESAGE : 2 - LES ARETES DE COUPE DES FORETS HELICOIDAUX" MACHINES PRODUCTION, SOFETEC. BOULOGNE/SEINE, FR, Nr. 562, 3. September 1991 (1991-09-03), Seiten 37-39,42, XP000220203 ISSN: 0047-536X

## Beschreibung

Die Erfindung betrifft einen Bohrer gemäß Oberbegriff des Anspruchs 1. Ein solcher Bohrer ist aus der DE 103 37 985 A1 bekannt.

Bohrer der genannten Art sind bekannt. Sie weisen mindestens eine Hauptschneide auf, die sich von einer Umfangsfläche des Bohrers im Wesentlichen in Richtung auf dessen Zentrum erstreckt. Im Bereich des Zentrums des Bohrers ist ein Schneidenbereich ausgebildet, der aufgrund eines deutlich größeren Keilwinkels als er in den radial äußeren Schneidenbereichen gegeben ist, eher schabt und drückt als schneidet. Umfasst der Bohrer zwei vorzugsweise - in Draufsicht auf eine Stirnseite des Bohrers gesehen - punktsymmetrisch zueinander angeordnete Hauptschneiden, so ist im Zentrumsbereich des Bohrers eine Querschneide ausgebildet, die die beiden Hauptschneiden verbindet. Diese weist einen deutlich größeren Keilwinkel auf als die Hauptschneiden. Es kommt hinzu, dass die Schnittgeschwindigkeit, das heißt die Bahngeschwindigkeit der Schneiden, von der Umfangsfläche zum Zentrum hin abnimmt. Hierdurch entstehen im Bereich der Querschneide hohe Druckbelastungen, die auch zu einer erhöhten Reibung führen. Die schabende, drückende Bearbeitungsweise der Querschneide und die hohen Druckbelastungen aufgrund der niedrigen Schnittgeschwindigkeit führen dazu, dass im Bereich des Zentrums des Bohrers eine deutlich erhöhte Kraft zu dessen Drehung aufgewendet werden muss, was das Bohren erschwert.

Aus diesem Grund ist bei bekannten Bohrern eine sogenannte Ausspitzung vorgesehen. Insbesondere bei Vollhartmetall-Bohrern und Hochleistungs-Hochgeschwindigkeitsstahl-Bohrern, die üblicherweise einen relativ großen Kerndurchmesser von 25 bis 35 % des Bohrdurchmessers aufweisen, ist eine solche Ausspitzung vorteilhaft, weil die Querschneide beziehungsweise der Zentrumsbereich hier besonders groß ausgebildet ist. Jeder Hauptschneide des Bohrers ist eine Spanfläche zugeordnet, deren Schnittlinie mit einer Freifläche die Hauptschneide definiert. Beim Ausspitzen wird die Spanfläche angeschliffen, so dass eine weitere Spanfläche entsteht, die - in radialer Richtung gesehen - weiter zum Zentrum des Bohrers hin angeordnet ist als der verbleibende Teil der ursprünglichen Spanfläche, wobei die beiden Spanflächen - senkrecht zur Längsachse des Bohrers gesehen - einen stumpfen Winkel miteinander einschließen. Durch dieses Anschleifen der Spanfläche wird eine Zentrumsschneide ausgebildet, die die Hauptschneide mit dem nun deutlich verkürzten Zentrumsbereich beziehungsweise der Querschneide des Bohrers verbindet. Aufgrund des verkürzten Zentrumsbereichs beziehungsweise der verkürzten Querschneide weist ein solcher Art ausgespitzter Bohrer einen deutlich geringeren Rotationswiderstand auf, was das Bohren erleichtert.

Es hat sich allerdings herausgestellt, dass bei der Bearbeitung von sehr zähen Werkstoffen, wie beispielsweise rostfreiem Stahl, nicht gleichzeitig eine ausreichende Stabilität der Zentrumsschneide und andererseits ein genügend großer Spanraum in deren Bereich bereitgestellt werden kann. Die Zentrumsschneide muss eine im Vergleich zur Hauptschneide erhöhte Stabilität aufweisen, weil hier aufgrund der geringeren Schnittgeschwindigkeit höhere Kräfte wirken. Die Stabilität der Zentrumsschneide ergibt sich aus deren Keilwinkel. Dies ist der Winkel, den die Freifläche und die Spanfläche einer Schneide miteinander einschließen. Bei großem Keilwinkel steht der Zentrumsschneide mehr Material zur Verfügung, in das Kräfte eingeleitet werden können, sie ist also stabiler. Gleichzeitig können hier auch mögliche Vibrationen besser aufgenommen beziehungsweise gedämpft werden. Ein großer Keilwinkel verkleinert allerdings den Spanraum, so dass Späne, welche im Bereich der Ausspitzung entstehen, in Richtung auf die Schneide zurück gestaut werden können, so dass die ohnehin hohen Spankräfte weiter vergrößert werden. Um den Spanraum zu vergrößern und damit den Spanabfluss zu verbessern, muss der Keilwinkel verkleinert werden, so dass die Zentrumsschneide eine geringere Stabilität aufweist, und Schnittkräfte nicht mehr so gut aufnehmen beziehungsweise Vibrationen nicht mehr so gut dämpfen kann, wie dies bei größeren Keilwinkeln der Fall ist. Es zeigt sich also, dass sich bei bekannten Bohrern eine optimale Stabilität der Zentrumsschneide und ein optimaler Spanablauf gegenseitig ausschließen. Die Folge von nicht ausreichend aufeinander abgestimmter Schneidenstabilität einerseits und Größe des Spanraums andererseits ist, dass ein Ausbruch des Bohrers im Bereich der Zentrumsschneide zu erwarten ist.

Aufgabe der Erfindung ist es daher, einen Bohrer zu schaffen, bei dem die genannten Nachteile nicht auftreten, der also sowohl eine ausreichend stabile Zentrumsschneide als auch einen ausreichend großen Spanraum in diesem Bereich aufweist.

Die Aufgabe wird gelöst durch einen Bohrer mit den Merkmalen des Anspruchs 1. Der Bohrer weist mindestens eine Hauptschneide und mindestens eine Zentrumsschneide auf. Er weist außerdem eine Längsachse auf, und der mindestens einen Hauptschneide und der mindestens einen Zentrumsschneide ist jeweils eine Spanfläche zugeordnet. Der Bohrer zeichnet sich dadurch aus, dass die der mindestens einen Zentrumsschneide zugeordnete Spanfläche mindestens zwei Teilflächen aufweist, die - senkrecht zur Längsache des Bohrers gesehen - einen stumpfen Winkel miteinander einschließen, so dass die mindestens eine Zentrumsschneide mindestens zwei Teilschneiden umfasst. Letztendlich bedeutet dies, dass der Bohrer zusätzlich zu einer ersten Ausspitzung mindestens ein zweites Mal ausgespitzt ist. Die Zentrumsschneide wird so in mindestens zwei Teilschneiden aufgeteilt, wobei die radial weiter innenliegende Teilschneide eine größere Stabilität bei kleinerem Spanraum aufweist, während die radial weiter außen gelegene Teilschneide eine geringere Stabilität, also einen geringeren Keilwinkel, bei größerem Spanraum aufweist. Die Zentrumsschneide kann also abhängig von ihrem radialen Abstand zum Zentrum bereichsweise auf die durch Schnittgeschwindigkeit und Spanaufkommen definierten Anforderungen optimal abgestimmt werden, so dass insbesondere in einem Bereich hoher Belastung eine hohe Stabilität der Zentrumsschneide gewährleistet ist, während in einem Bereich geringerer Belastung aber höheren Spanaufkommens ausreichend Spanraum zur Verfügung steht, um eine reibungsarme Abfuhr der Späne zu gewährleisten.

Der Bohrer zeichnet sich dadurch aus, dass der Hauptschneide und den mindestens zwei Teilschneiden der Zentrumsschneide jeweils ein Spanwinkel zugeordnet ist, dessen Wert mit zunehmendem radialen Abstand der zugeordneten Haupt- beziehungsweise Teilschneide zur Längsachse des Bohrers zunimmt. Die radial weiter außerhalb gelegenen Schneiden des Bohrers weisen also einen größeren Spanwinkel auf als die radial weiter innen gelegenen.

Bevorzugt wird auch ein Bohrer, bei dem zumindest der Spanwinkel, welcher der am nächsten zur Längsachse des Bohrers angeordneten Teilschneide zugeordnet ist, einen negativen Wert aufweist. Der Spanwinkel vergrößert sich dann vorzugsweise vom Zentrum in Richtung der Umfangsfläche des Bohrers, bis er spätestens im Bereich der Hauptschneide einen positiven Wert annimmt. Ein negativer Spanwinkel bedingt einen großen Keilwinkel, so dass in dessen Bereich eine hohe Stabilität der Schneide gegeben ist. Der radial nach außen zunehmende Spanwinkel bewirkt außerdem, dass die Schneide zum Bereich höherer Schnittgeschwindigkeiten, also zur Umfangsfläche hin, schnittfreudiger wird.

Weitere vorteilhafte Ausgestaltungen ergeben sich aus den Unteransprüchen.

Die Erfindung wird im Folgenden anhand der Zeichnung näher erläutert.

Es zeigen:
- Figur 1: eine Stirnansicht eines bekannten Bohrers mit konventioneller Geometrie;
- Figur 2: einen Längsschnitt durch den Bohrer gemäß Figur 1;
- Figur 3: eine Stirnansicht eines ersten Ausführungsbeispiels eines erfindungsgemäßen Bohrers;
- Figur 4: eine Seitenansicht des Bohrers gemäß Figur 3;
- Figur 5: einen Längsschnitt durch den Bohrer gemäß Figur 3;
- Figur 6: einen Längsschnitt durch den Bohrer gemäß Figur 3 in einer Ebene, auf der die am weitesten radial innen gelegene Teilschneide der Zentrumsschneide senkrecht steht;
- Figur 7: einen Längsschnitt durch den Bohrer gemäß Figur 3 in einer Ebene, auf der die zweite, radial weiter außen gelegene Teilschneide der Zentrumsschneide senkrecht steht;
- Figur 8: einen Längsschnitt durch den Bohrer gemäß Figur 3 in einer Ebene, auf der die Hauptschneide senkrecht steht;
- Figur 9: eine Ansicht des Bohrers gemäß Figur 3, wobei die Blickrichtung in Richtung einer seitlichen Begrenzungsfläche einer Teilfläche gewählt ist, welche der radial dem Zentrum am nächsten angeordneten Teilschneide der Zentrumsschneide zugeordnet ist;
- Figur 10: eine Ansicht des Bohrers gemäß Figur 3, wobei die Blickrichtung in Richtung einer seitlichen Begrenzungsfläche einer Teilfläche gewählt ist, welche der radial weiter außerhalb gelegenen Teilschneide der Zentrumsschneide zugeordnet ist;
- Figur 11: eine Ansicht des Bohrers gemäß Figur 3, wobei die Blickrichtung in Richtung einer seitlichen Begrenzungsfläche gewählt ist, welche der Spanfläche der Hauptschneide zugeordnet ist;
- Figur 12: eine Stirnansicht eines zweiten Ausführungsbeispiels eines erfindungsgemäßen Bohrers, und
- Figur 13: eine Seitenansicht des Bohrers gemäß Figur 12.

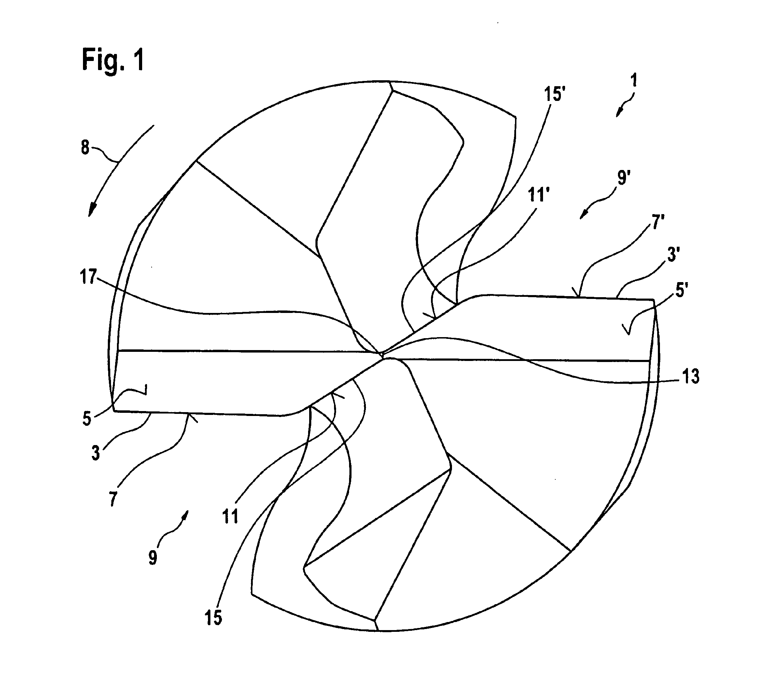

Figur 1 zeigt eine Stirnansicht eines bekannten Bohrers 1, der eine konventionelle Geometrie mit einer Ausspritzung aufweist. Er umfasst mindestens eine Hauptschneide, hier genau zwei Hauptschneiden 3, 3'. Die Hauptschneiden 3, 3' werden jeweils gebildet durch die Schnittlinie einer Freifläche 5, 5' mit einer Spanfläche 7, 7'. Die Freiflächen 5, 5' eilen den Hauptschneiden 3, 3' in Schnittrichtung nach, wobei die Schnittrichtung hier die Rotationsrichtung des Bohrers während der Bearbeitung eines Werkstück ist. Bei dem dargestellten Ausführungsbeispiel verläuft diese Richtung entgegen dem Uhrzeigersinn, was durch den Pfeil 8 angedeutet ist. Die Freiflächen 5, 5' fallen entgegen der Schnittrichtung ab, so dass sie mit einer parallel zu einer bearbeitenden Oberfläche des Werkstücks orientierten Ebene einen Winkel einschließen, der Freiwinkel genannt wird. Auf den Spanflächen 7, 7' laufen Späne ab, die durch die Hauptschneiden 3, 3' von dem Werkstück abgetragen werden. Die Spanflächen 7, 7' schließen mit einer Ebene, die senkrecht auf der bearbeiteten Oberfläche des Werkstücks steht und parallel zur jeweiligen Hauptschneide 3, 3' ausgerichtet ist einen Winkel ein, der Spanwinkel genannt wird. Der Spanwinkel beträgt 0°, wenn die Spanfläche parallel zu der Ebene orientiert ist. Er wird als positiver Winkel angegeben, wenn die Spanfläche entgegen der Schnittrichtung abfällt, und wird als negativer Winkel angegeben, wenn die Spanfläche 7, 7' entgegen der Schnittrichtung ansteigt.

Die Spanflächen 7, 7' und die Freiflächen 5, 5' schließen miteinander einen Winkel ein, der Keilwinkel genannt wird. Es zeigt sich, dass die Summe aus Spanwinkel, Keilwinkel und Freiwinkel stets 90° beträgt. Der Keilwinkel bestimmt die Stabilität der Schneide, weil bei großem Keilwinkel entsprechend mehr Material zum Aufnehmen von Schnittkräften beziehungsweise Dämpfen von Vibrationen zur Verfügung steht, als bei kleinerem Keilwinkel. Bei festgehaltenem Freiwinkel bestimmt der Keilwinkel den Spanwinkel, so dass er insbesondere festlegt, welches Volumen den abfließenden Spänen in durch die Spanflächen 7, 7' begrenzten Spanräumen 9, 9' zur Verfügung steht.

Durch die Ausspitzung werden die Spanflächen 7, 7' in zwei Teilflächen geteilt, beziehungsweise es werden neue Spanflächen 11, 11' gebildet, die - senkrecht zu einer Längsachse 13 des Bohrers 1 gesehen - einen stumpfen Winkel miteinander einschließen. Die Spanflächen 11, 11' weisen wiederum Schnittlinien mit den Freiflächen 5, 5' auf, so dass hier Zentrumsschneiden 15, 15' ausgebildet werden. Diese sind durch eine im Zentrum des Bohrers verlaufende, vorzugsweise die Längsachse 13 schneidende Querschneide 17 miteinander verbunden.

Mit radialem Abstand von der Längsachse 13 nimmt die Schnittgeschwindigkeit aufgrund der höheren Bahngeschwindigkeit des Bohrers 1 zu. Dies bedeutet insbesondere, dass im Bereich der Zentrumsschneiden 15, 15' eine relativ geringe Schnittgeschwindigkeit gegeben ist, die in Richtung auf die Längsachse 13 hin noch weiter abnimmt. Dadurch sind in diesem Bereich besonders hohe Schnittkräfte gegeben. Gleichzeitig sollen Späne möglichst effizient und ohne Rückstau auf die Zentrumsschneiden 15, 15' abgeführt werden, weil sonst zusätzliche Kräfte auf diese wirken und es zu einer Überlastung kommen kann. Eine ausreichende Stabilität der Zentrumsschneiden 15, 15' zur Aufnahme der Schrittkräfte und Dämpfung möglicher Vibrationen kann durch einen ausreichend großen Keilwinkel erreicht werden. Andererseits führt ein großer Keilwinkel dazu, dass die Spanflächen 11, 11' weiter in die Spanräume 9, 9' hineinragen, weil der Spanwinkel bei gegebenem Freiwinkel kleiner wird. Insbesondere wenn ein negativer Spanwinkel realisiert wird, ist zwar die Zentrumsschneide 15, 15' besonders stabil, der Spanraum ist aber relativ klein, so dass es leicht zu einem Rückstau der Späne auf die Zentrumsschneiden 15, 15' kommen kann. Wird andererseits das Spanraumvolumen durch einen ausreichend großen Spanwinkel und damit bei gegebenem Freiwinkel einen entsprechend kleineren Keilwinkel vergrößert, so dass die Späne ungehindert abfließen können, führt dies wiederum zu einer geringeren Stabilität der Zentrumsschneiden 15, 15'. Es zeigt sich also, dass es mit einer konventionellen Ausspitzungsgeometrie nicht möglich ist, sowohl die Stabilität der Zentrumsschneiden 15, 15' als auch das für eine störungsfreie Abfuhr der Späne notwendige Spanraumvolumen zu optimieren.

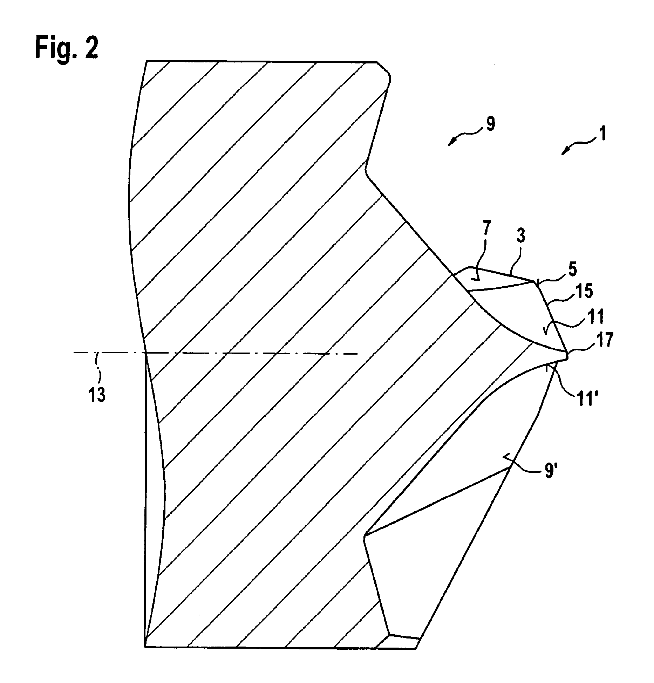

Figur 2 zeigt einen Längsschnitt durch den Bohrer gemäß Figur 1. Gleiche und funktionsgleiche Elemente sind mit gleichen Bezugszeichen versehen, so dass insofern auf die vorangegangene Beschreibung verwiesen wird. Wie bereits gesagt wird der Keilwinkel als Winkel bestimmt, den eine Spanfläche mit einer zugeordneten Freifläche einschließt. Hier interessiert besonders der Keilwinkel, der von den Spanflächen 11, 11' der Zentrumsschneiden 15, 15' mit den Freiflächen 5, 5' eingeschlossen wird. Es zeigt sich, dass im Bereich der Zentrumsschneide 17 die Freiflächen 5, 5' verschwinden. Der Freiwinkel ist in diesem Bereich dann als Winkel zwischen der Spanfläche 11 der Zentrumsschneide 15 und der Spanfläche 11' der Zentrumsschneide 15' gegeben, wobei jede dieser Spanflächen gleichsam die Freifläche für die der anderen Zentrumsschneide zugeordnete Spanfläche bildet. In Figur 2 ist noch ein Ausläufer der Spanfläche 11' der Zentrumsschneide 15' zu erkennen. Der Keilwinkel im Bereich der Zentrumsschneide 17 kann hier also angegeben werden als der Winkel, den die Spanflächen 11, 11' in diesem Bereich miteinander einschließen. Aus Figur 2 wird deutlich, dass dieser Keilwinkel bei einer konventionellen Ausspitzungsgeometrie sehr klein ist, so dass hier keine ausreichende Stabilität der Zentrumsschneiden 15, 15' gewährleistet werden kann. Gleichzeitig zeigt sich aber auch, dass die Spanräume 9, 9' im Bereich der Spanflächen 11, 11' relativ klein sind, insbesondere in Richtung auf die Längsachse 13 hin. Die konventionelle Ausspitzungsgeometrie gewährleistet also weder eine ausreichende Stabilität der Zentrumsschneiden 15, 15', noch wird ein ausreichend großes Spanraumvolumen für die Spanräume 9, 9' im Bereich der Zentrumsschneiden 15, 15' und insbesondere in einem Bereich, der radial nah an der Längsachse 13 angeordnet ist, gewährleistet.

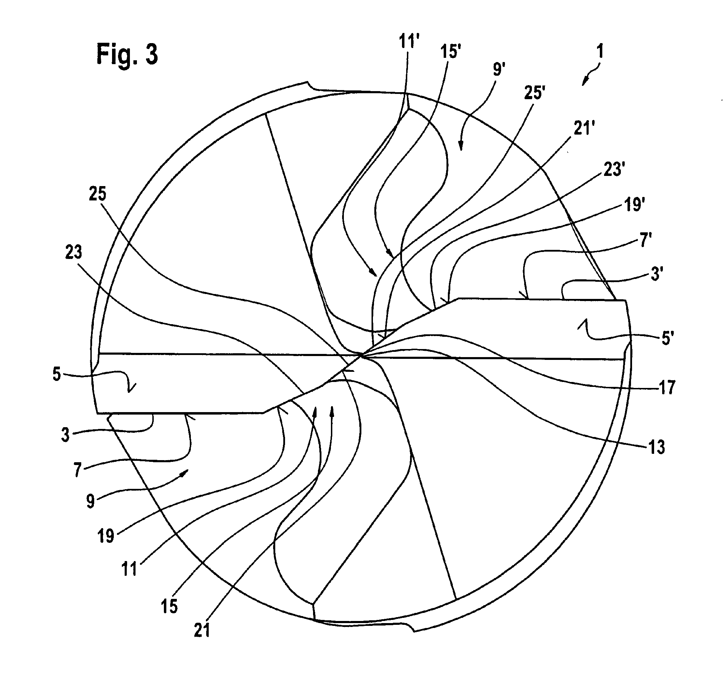

Figur 3 zeigt eine Stirnansicht eines ersten Ausführungsbeispiels eines Bohrers 1 gemäß der vorliegenden Erfindung. Gleiche und funktionsgleiche Elemente sind mit gleichen Bezugszeichen versehen, so dass insofern auf die vorangegangene Beschreibung verwiesen wird. Auch hier ist den Hauptschneiden 3, 3' jeweils eine Spanfläche 7, 7' zugeordnet. Den Zentrumsschneiden 15, 15' ist jeweils eine Spanfläche 11, 11' zugeordnet. Es zeigt sich nun, dass der erfindungsgemäße Bohrer 1 eine weitere Ausspitzung aufweist, wobei die den Zentrumsschneiden 15, 15' zugeordneten Spanflächen 11, 11' so geschliffen oder in sonstiger Weise bearbeitet sind, dass sie jeweils zwei Teilflächen aufweisen, nämlich eine radial - in Richtung auf die Längsachse 13 gesehen - weiter außerhalb angeordnete Teilfläche 19, 19', und eine radial weiter innen angeordnete Teilfläche 21, 21'. Diese Teilflächen 19, 19' und 21, 21' weisen jeweils eine Schnittlinie mit den Freiflächen 5, 5' auf, so dass die Zentrumsschneiden 15, 15' jeweils eine Teilschneide 23, 23', die der Teilfläche 19, 19' zugeordnet ist, und eine Teilschneide 25, 25', die der Teilfläche 21, 21' zugeordnet ist, umfassen. Die Teilfläche 19 schließt mit der Teilfläche 21 - senkrecht zur Längsachse 13 des Bohrers 1 gesehen - einen stumpfen Winkel ein, so dass auch die Teilschneiden 23, 25 einen stumpfen Winkel miteinander einschließen. In gleicher Weise schließen die Teilflächen 19' und 21' einen stumpfen Winkel miteinander ein, so dass auch die Teilschneiden 23' und 25' einen stumpfen Winkel miteinander einschließen.

Das dargestellte Ausführungsbeispiel eines Bohrers 1 wird im allgemeinen aus einem konventionellen Bohrer ohne jegliche Ausspitzung so hergestellt, dass zunächst eine radial weiter innen angeordnete erste Ausspitzung gefertigt wird, wobei die Teilflächen 21, 21' entstehen. Danach wird eine radial weiter außen angeordnete zweite Ausspitzung gefertigt, so dass die Teilflächen 19, 19' entstehen. Selbstverständlich ist es auch möglich, die Reihenfolge des Ausspitzens umgekehrt zu wählen, so dass also zunächst die Teilflächen 19, 19' und dann die Teilflächen 21, 21' gebildet werden.

Es zeigt sich, dass das in Figur 3 dargestellte Ausführungsbeispiel je Hauptschneide 3, 3' zwei Ausspitzungen aufweist, so dass Zentrumsschneiden 15, 15' in zwei Teilschneiden 23, 23' und 25, 25' aufgeteilt werden. Bei einem anderen Ausführungsbeispiel ist es auch möglich, dass mehr als zwei Ausspitzungen vorgesehen sind, dass also Zentrumsschneiden 15, 15' in mehr als zwei Teilschneiden 23, 23' und 25, 25' aufgeteilt werden. Bei wieder einem anderen Ausführungsbeispiel kann der Bohrer 1 auch nur eine Hauptschneide 3 aufweisen. Auch in diesem Fall ist es möglich, die Geometrie des Bohrers durch zweimaliges oder mehrfaches Ausspitzen so auszugestalten, dass eine Zentrumsschneide 15 zwei oder mehr Teilschneiden 23, 25 umfasst. Ein weiteres Ausführungsbeispiel eines Bohrers 1 kann bevorzugt mehr als zwei Hauptschneiden 3, 3' umfassen, wobei auch hier zwei oder mehr Ausspitzungen an einer Hauptschneide, an mehreren Hauptschneiden, oder an allen Hauptschneiden vorgesehen werden können. Selbstverständlich ist es auch bei einem Ausführungsbeispiel mit zwei Hauptschneiden 3, 3' möglich, nur an einer Hauptschneide 3 eine doppelte oder mehrfache Ausspitzung vorzusehen.

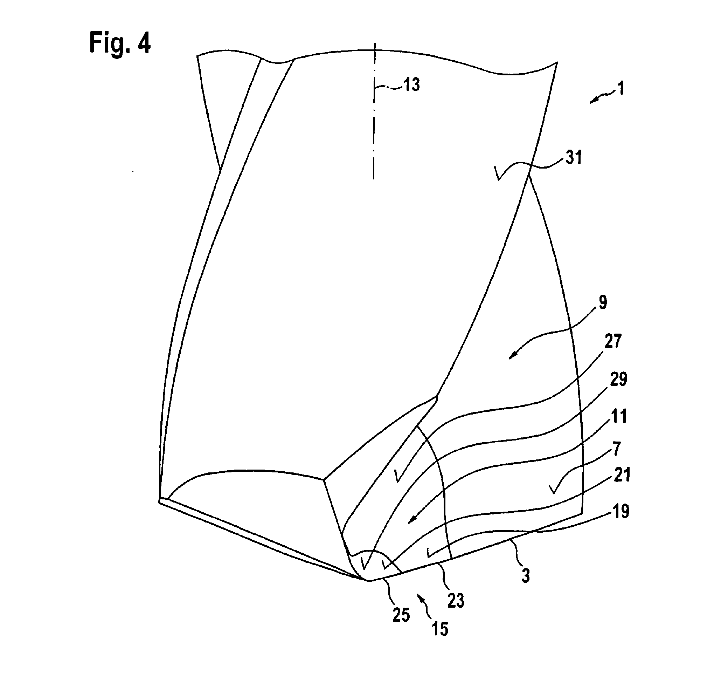

Figur 4 zeigt eine Seitenansicht des Bohrers 1 gemäß Figur 3. Gleiche und funktionsgleiche Elemente sind mit gleichen Bezugszeichen versehen, so dass insofern auf die vorangegangene Beschreibung verwiesen wird. Der Spanfläche 7 sowie den Teilflächen 19 und 21 der Spanfläche 11 sind jeweils seitliche Begrenzungsflächen zugeordnet, von denen hier eine seitliche Begrenzungsfläche 27, die der Teilfläche 19 zugeordnet ist, und eine seitliche Begrenzungsfläche 29, die der Teilfläche 21 zugeordnet ist, erkennbar sind. Eine seitliche Begrenzungsfläche, die der Spanfläche 7 zugeordnet ist, ist nicht dargestellt, weil sie von einer Umfangsfläche 31 des Bohrers 1 verdeckt wird. Durch die radial in Richtung zur Längsachse 13 hin abnehmende Schnittgeschwindigkeit fließen die von der Hauptschneide 3 und den Teilschneiden 23, 25 abgetragenen Späne auf der Spanfläche 7 beziehungsweise den Teilflächen 19, 21 in Richtung auf die seitlichen Begrenzungsflächen 27, 29 und auf die seitliche Begrenzungsfläche, die der Spanfläche 7 zugeordnet ist, und werden von diesen umgelenkt und geformt. Insbesondere können sich die Späne einrollen, was optimal für einen Abtransport der Späne im Spanraum 9 ist.

Die Spanfläche 7 beziehungsweise Teilflächen 19, 21 schließen mit den ihnen jeweils zugeordneten seitlichen Begrenzungsflächen 27, 29 beziehungsweise der nicht dargestellten seitlichen Begrenzungsfläche der Spanfläche 7 vorzugsweise jeweils verschiedene Winkel ein. Die Spanfläche 7 schließt also mit der nicht dargestellten, ihr zugeordneten seitlichen Begrenzungsfläche vorzugsweise einen anderen Winkel ein, als die Teilfläche 19 mit der ihr zugeordneten seitlichen Begrenzungsfläche 27. Die Teilfläche 21 schließt mit der ihr zugeordneten seitlichen Begrenzungsfläche 29 vorzugsweise wiederum einen anderen Winkel ein.

Bei einem anderen Ausführungsbeispiel ist es auch möglich, dass die Winkel, die die Spanfläche 7 beziehungsweise die Teilflächen 19, 21 mit den ihnen jeweils zugeordneten seitlichen Begrenzungsflächen 27, 29 einschließen, gleich sind.

Die Winkel, die die Spanfläche 7 beziehungsweise die Teilflächen 19, 21 mit den ihnen jeweils zugeordneten seitlichen Begrenzungsflächen 27, 29 einschließen, liegen vorzugsweise zwischen 60° und 140°, besonders bevorzugt zwischen 70° und 130°, und ganz besonders bevorzugt zwischen 80° und 120°. Bei einem anderen Ausführungsbeispiel können die Winkel um 100° verteilt sein, also insbesondere ungefähr 100° betragen. Bei wieder einem anderen Ausführungsbeispiel können aber insbesondere auch größere Winkel, vorzugsweise bis 160°, besonders bevorzugt bis 170° verwirklicht werden.

Es versteht sich von selbst, dass alles, was in Zusammenhang mit Figur 4 gesagt wurde, genauso auch für jede andere Hauptschneide 3, 3' eines Bohrers 1 gilt, die mindestens zwei Ausspitzungen aufweist. Lediglich der Einfachheit halber wurden bei der Beschreibung von Figur 4 die gestrichenen Bezugszeichen nicht erwähnt. Es zeigt sich auch noch, dass wenn mehr als zwei Ausspitzungen vorgesehen sind, auch mehr als drei seitliche Begrenzungsflächen 27, 29 - unter Berücksichtigung der in Figur 4 nicht dargestellten seitlichen Begrenzungsfläche - vorgesehen sind, wobei jede dieser seitlichen Begrenzungsflächen 27, 29 einer Spanfläche 19, 21 zugeordnet ist.

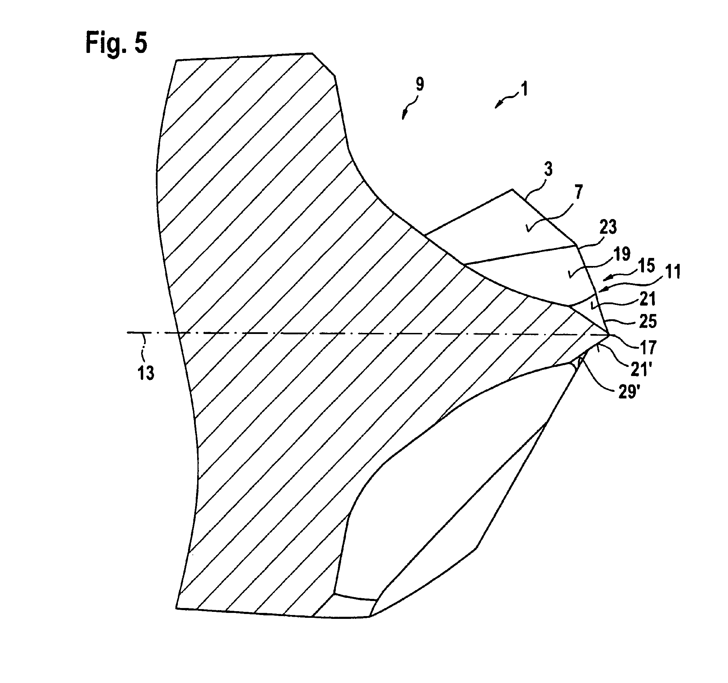

Figur 5 zeigt einen Längsschnitt durch den Bohrer 1 gemäß Figur 3. Gleiche und funktionsgleiche Elemente sind mit gleichen Bezugszeichen versehen, so dass insofern auf die vorangegangene Beschreibung verwiesen wird.

In Figur 5 wird deutlich, dass die - in radialer Richtung gesehen - näher an der Längsachse 13 angeordnete Ausspitzung unter einem größerem Winkel zur Längsachse 13 in den Bohrer 1 eingebracht ist als die - in radialer Richtung gesehen - weiter außerhalb angeordnete Ausspitzung. Dies ist insbesondere an den Winkeln erkennbar, die die Teilflächen 19, 21 mit der Längsachse 13 einschließen. Der Keilwinkel im Bereich der Querschneide 17 wird hier definiert durch den Winkel, die die im Bereich der Querschneide 17 angeordneten Ausläufer der Teilflächen 21, 21' miteinander einschließen. Dies ist völlig in Übereinstimmung mit der Art, in der in Zusammenhang mit dem in Figur 2 dargestellten Ausführungsbeispiel der Keilwinkel im Bereich der Querschneide 17 bestimmt wurde. Es zeigt sich nun, dass bei dem in Figur 5 dargestellten Ausführungsbeispiel in diesem Bereich ein deutlich größerer Keilwinkel gegeben ist, als dies bei dem in Figur 2 dargestellten konventionellen Bohrer 1 der Fall ist. Insbesondere die Teilschneiden 25, 25' weisen also eine erhöhte Stabilität auf, und können so Schnittkräfte besser aufnehmen und Schwingungen dämpfen oder vorzugsweise gar nicht erst entstehen lassen. Gleichzeitig zeigt sich, dass der der Teilschneide 23 zugeordnete Spanwinkel bei dem Ausführungsbeispiel gemäß Figur 5 größer ist als der Spanwinkel, der bei dem konventionellen Bohrer 1 aus Figur 2 der Zentrumsschneide 15 zugeordnet war. Die Teilfläche 19 ragt aufgrund des größeren Spanwinkels weniger weit in den Spanraum 9 hinein, sodass hier mehr Raum bleibt, in dem die Späne reibungsarm abfließen können. Ein Rückstau auf die Teilschneide 23 wird so sicher vermieden, sodass es auch nicht zu einer Überlastung der Zentrumsschneide 15 kommen kann.

Das in Figur 5 dargestellte Ausführungsbeispiel einer Bohrers 1 verbindet also eine deutlich erhöhte Stabilität im Bereich kleinster Schnittgeschwindigkeit mit einem vorteilhaft vergrößerten Spanraum in einem radial weiter außerhalb gelegenen Bereich höherer Schnittgeschwindigkeit, sodass gleichzeitig eine hohe Stabilität der Zentrumsschneide im Bereich des Zentrums als auch eine effiziente Spanabfuhr in einem weiter außerhalb gelegenen Bereich gewährleistet ist.

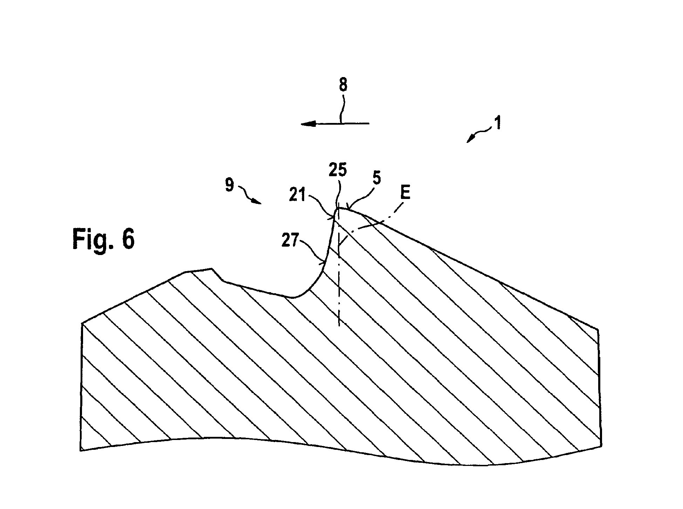

Figur 6 zeigt einen Längsschnitt durch den Bohrer 1 gemäß Figur 3 in einer Ebene, die senkrecht auf der Teilschneide 25 steht. Gleiche und funktionsgleiche Elemente sind mit gleichen Bezugszeichen versehen, sodass insofern auf die vorangegangene Beschreibung verwiesen wird. In Figur 6 sind die Freifläche 5 und die Teilfläche 21 der Spanfläche 11 dargestellt, deren Schnittlinie die Teilschneide 25 bildet. In dieser Ansicht geht die Teilfläche 21 über in einen Ausläufer der seitlichen Begrenzungsfläche 27, die der Teilfläche 19 der Spanfläche 11 zugeordnet ist. Es zeigt sich, dass im Bereich der Teilschneide 25 ein relativ großer Keilwinkel gegeben ist, den die Freifläche 5 und die Teilfläche 21 miteinander einschließen. Dadurch weist die Teilschneide 25 eine erhöhte Stabilität auf, sodass hier auch erhöhte Schnittkräfte sicher aufgenommen und Vibrationen gedämpft, vorzugsweise vermieden werden können.

Der Teilschneide 25 ist ein Spanwinkel zugeordnet, den die Teilfläche 21 mit einer Ebene einschließt, die auf einer von der Teilschneide 25 zu bearbeitenden Werkstückoberfläche senkrecht steht, wobei sie parallel zur Teilschneide 25 ausgerichtet ist. Diese Ebene ist hier strichpunktiert als Ebene E gekennzeichnet. Die Schnittrichtung ist wiederum durch den Pfeil 8 angezeigt.

Es zeigt sich, dass die Teilfläche 21 entgegen der durch den Pfeil 8 angedeuteten Schnittrichtung ansteigt. Der Teilschneide 25 beziehungsweise der Teilfläche 21 ist also ein negativer Spanwinkel zugeordnet. Bei einem anderen, nicht dargestellten Ausführungsbeispiel, kann der Teilschneide 25 auch ein positiver Spanwinkel zugeordnet sein, es werden aber Ausführungsbeispiele bevorzugt, bei denen zumindest der der am nächsten zur Längsache 13 des Bohrers 1 angeordneten Teilschneide zugeordnete Spanwinkel einen negativen Wert aufweist. Dies stellt eine ausreichende Stabilität der Zentrumsschneide 15, 15' im Bereich kleinster Schnittgeschwindigkeiten, also im Bereich des Zentrums des Bohrers 1, sicher.

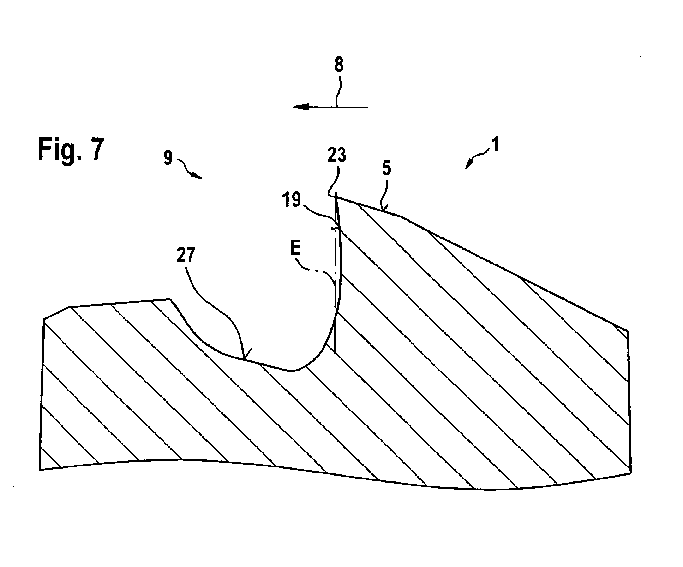

Figur 7 zeigt einen Längsschnitt durch den Bohrer 1 gemäß Figur 3 in einer Ebene, auf der die Teilschneide 23 senkrecht steht. Die Freifläche 5 und die Teilfläche 19 der Spanfläche 11 weisen eine Schnittlinie auf, die die Teilschneide 23 bildet. In der dargestellten Ansicht geht die Teilfläche 19 schließlich über in die ihr zugeordnete seitliche Begrenzungsfläche 27. Auch hier ist eine Ebene E strichpunktiert dargestellt, die senkrecht auf einer durch die Teilschneide 23 zu bearbeitenden Werkstückoberfläche steht, wobei sie parallel zur Teilschneide 23 orientiert ist. Es zeigt sich hier, dass die Teilfläche 19 entgegen der durch den Pfeil 8 angedeuteten Schnittrichtung abfällt, also mit der Ebene E einen positiven Spanwinkel einschließt. Gleichzeitig zeigt sich, dass der durch die Freifläche 5 und die Teilfläche 19 eingeschlossene Keilwinkel kleiner ist als im Bereich der Teilschneide 25. Die Teilschneide 23 weist also gegenüber der Teilschneide 25 eine verringerte Stabilität auf, was nicht von Nachteil ist, weil hier bereits höhere Schnittgeschwindigkeiten vorherrschen, weil die Teilschneide 23 einen größeren radialen Abstand von der Längsachse 13 beziehungsweise dem Zentrum des Bohrers 1 aufweist. Durch den positiven Spanwinkel, der der Teilschneide 23 zugeordnet ist, ist hier der Spanraum 9 vergrößert, sodass ein reibungsarmer Abfluss der von der Teilschneide 23 abgetragenen Späne möglich ist.

Bei einem anderen, nicht dargestellten Ausführungsbeispiel ist es auch möglich, dass der Teilschneide 23 ein negativer Spanwinkel zugeordnet ist. Dies kann je nach Anordnung der Teilschneiden 25 und 23 und insbesondere nach den zu erwartenden Schnittkräften auf die konkret vorliegenden Anforderungen an den Bohrer 1 abgestimmt werden. Der Spanwinkel, der der Teilschneide 23 zugeordnet ist, ist jedoch größer als der Spanwinkel, der der Teilschneide 25 zugeordnet ist.

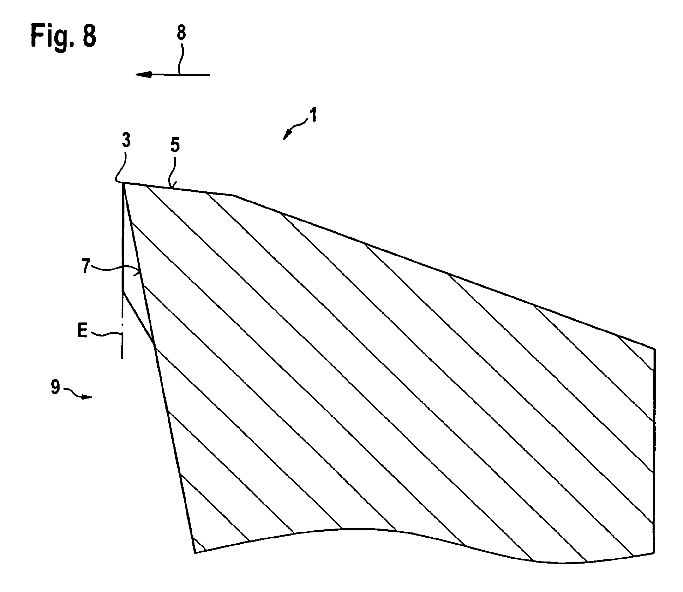

Figur 8 zeigt einen Längsschnitt durch den Bohrer 1 gemäß Figur 3 in einer Ebene, auf der die Hauptschneide 3 senkrecht steht. Gleiche und funktionsgleiche Elemente sind mit gleichen Bezugszeichen versehen, sodass insofern auf die vorangegangene Beschreibung verwiesen wird. Auch hier ist strichpunktiert wieder eine Ebene E dargestellt, die senkrecht auf einer durch die Hauptschneide 3 zu bearbeitenden Werkstückoberfläche steht und parallel zur Hauptschneide 3 orientiert ist. Die dieser zugeordnete Spanfläche 7 schließt mit der Ebene E einen positiven Spanwinkel ein, sie fällt also entgegen der durch den Pfeil 8 dargestellten Schnittrichtung ab. Der der Hauptschneide 3 zugeordnete Spanwinkel ist größer als der Spanwinkel, welcher der Teilschneide 23 zugeordnet ist. Die Spanfläche 7 weicht also im Bereich hoher Schnittgeschwindigkeit besonders weit aus dem Spanraum 9 aus, sodass hier viel Raum zur Verfügung steht, in dem die Späne reibungsarm abgeführt werden können.

Insgesamt zeigt sich das Folgende: Der Hauptschneide 3 und den mindestens zwei Teilschneiden 23, 25 der Zentrumsschneide 15 ist jeweils ein Spanwinkel zugeordnet, dessen Wert mit zunehmendem radialen Abstand der zugeordneten Schneide, also der Haupt- beziehungsweise Teilschneide, zur Längsachse 13 des Bohrers 1 zunimmt. Insbesondere wird bevorzugt, dass zumindest der Spanwinkel, welcher der am nächsten zur Längsachse 13 des Bohrers 1 angeordneten Teilschneide zugeordnet ist, einen negativen Wert aufweist. Dies deswegen, weil dann insbesondere im Bereich kleiner Schnittgeschwindigkeiten, also im Bereich des Zentrums des Bohrers 1, eine ausreichende Schneidenstabilität gewährleistet ist. Der sich radial nach außen vergrößernde Spanwinkel gewährleistet dann schrittweise in Bereichen höherer Schnittgeschwindigkeit einen größeren Spanraum 9, sodass Späne ungehindert abfließen können. Gleichzeitig werden die Schneiden mit zunehmenden ihnen zugeordneten Spanwinkeln schnittfreudiger, sodass von der Längsachse 13 radial nach außen hin gesehen mit zunehmender Schnittgeschwindigkeit zunehmend schnittfreudigere Schneiden zur Verfügung stehen.

Das hier in Zusammenhang mit den Figuren 6 bis 8 Gesagte gilt selbstverständlich für jede Hauptschneide 3, 3' eines Bohrers 1, die mindestens eine zweifache Ausspitzung aufweist. Lediglich der Übersichtlichkeit halber wurde bei der gewählten Darstellung auf die gestrichenen Bezugszeichen verzichtet. Sind mehr als zwei Ausspitzungen vorgesehen, gilt das Gesagte entsprechend, sodass insbesondere auch hier im Bereich des Zentrums des Bohrers vorzugsweise ein negativer Spanwinkel vorgesehen ist, wobei der Wert des Spanwinkels mit zunehmendem radialen Abstand von der Längsachse 13 des Bohrers 1 zunehmend größere Werte aufweist.

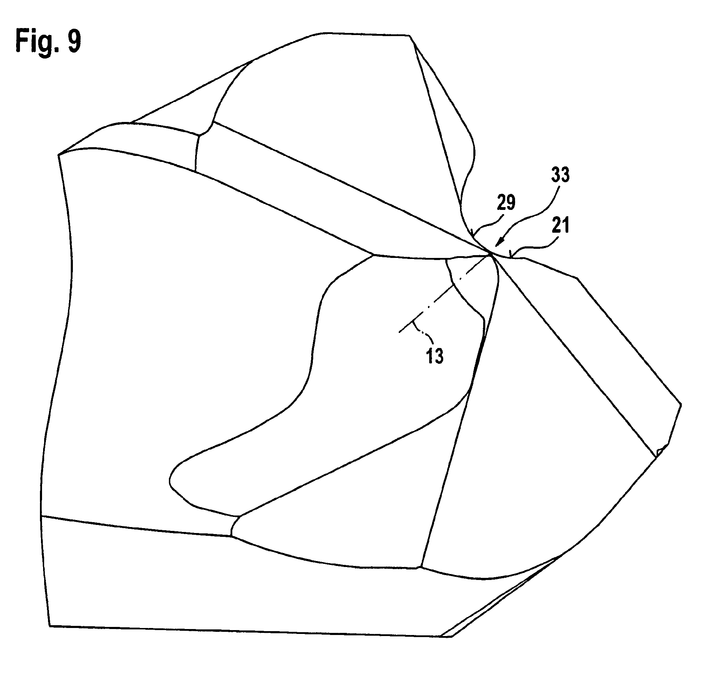

Figur 9 zeigt eine Ansicht des Bohrers 1 gemäß Figur 3, wobei die Blickrichtung des Betrachters in Richtung der seitlichen Begrenzungsfläche 29, die der Teilfläche 21 zugeordnet ist, verläuft. Die seitliche Begrenzungsfläche 29 steht hier also senkrecht auf der Bildebene. Gleiche und funktionsgleiche Elemente sind mit gleichen Bezugszeichen versehen, sodass insofern auf die vorangegangene Beschreibung verwiesen wird. Die seitliche Begrenzungsfläche 29 schließt einen vorzugsweise spitzen Winkel mit der Längsachse 13 des Bohrers 1 ein. Es zeigt sich, dass bei dem dargestellten Ausführungsbeispiel ein Übergang 33 zwischen der Teilfläche 21 und der Begrenzungsfläche 29 verrundet ausgebildet ist.

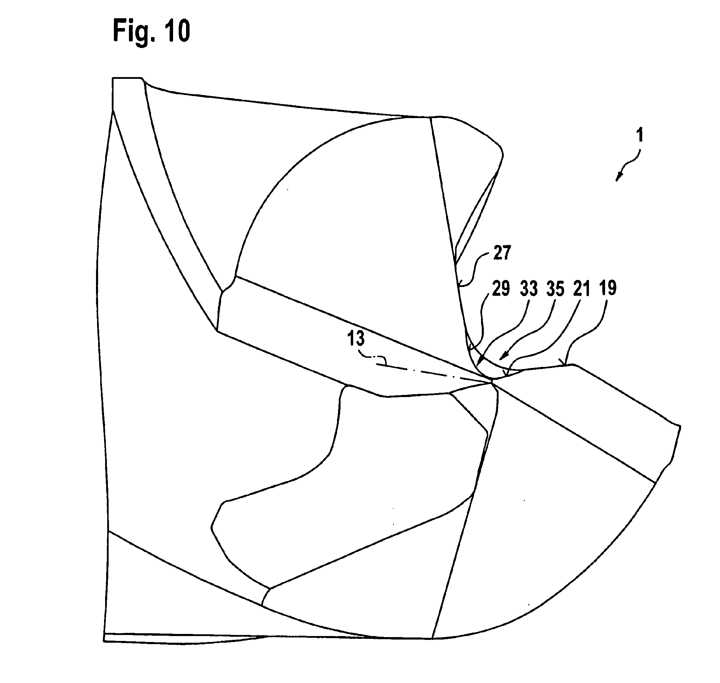

Figur 10 stellt eine Ansicht des Bohrers 1 gemäß Figur 3 dar, wobei die Blickrichtung des Betrachters in Richtung der seitlichen Begrenzungsfläche 27, die der Teilfläche 19 zugeordnet ist, ausgerichtet ist. Gleiche und funktionsgleiche Elemente sind mit gleichen Bezugszeichen versehen, sodass insofern auf die vorangegangene Beschreibung verwiesen wird. Die seitliche Begrenzungsfläche 27 schließt mit der Längsachse 13 des Bohrers 1 ebenfalls vorzugsweise einen spitzen Winkel ein, wobei dessen Wert kleiner ist als der Wert des Winkels, den die seitliche Begrenzungsfläche 29 mit der Längsachse 13 einschließt. Dies kann insbesondere an folgendem Zusammenhang erkannt werden: In Figur 9, deren Ansicht in Richtung der seitlichen Begrenzungsfläche 29 orientiert ist, ist keine der seitlichen Begrenzungsflächen sichtbar. Wird der Bohrer 1 so verschwenkt, dass die Blickrichtung parallel zur seitlichen Begrenzungsfläche 27 orientiert ist, wird die seitliche Begrenzungsfläche 29 sichtbar. Diese schließt also einen größeren Winkel mit der Längsachse 13 ein, als die seitliche Begrenzungsfläche 27.

Bei dem dargestellten Ausführungsbeispiel gehen die Teilfläche 19 und die seitliche Begrenzungsfläche 27 im Bereich eines verrundeten Übergangs 35 ineinander über. Es zeigt sich, dass der Radius des Übergangs 35 hier vorzugsweise größer ist als der Radius des verrundeten Übergangs 33, in dessen Bereich die Teilfläche 21 und die ihr zugeordnete seitliche Begrenzungsfläche 29 ineinander übergehen.

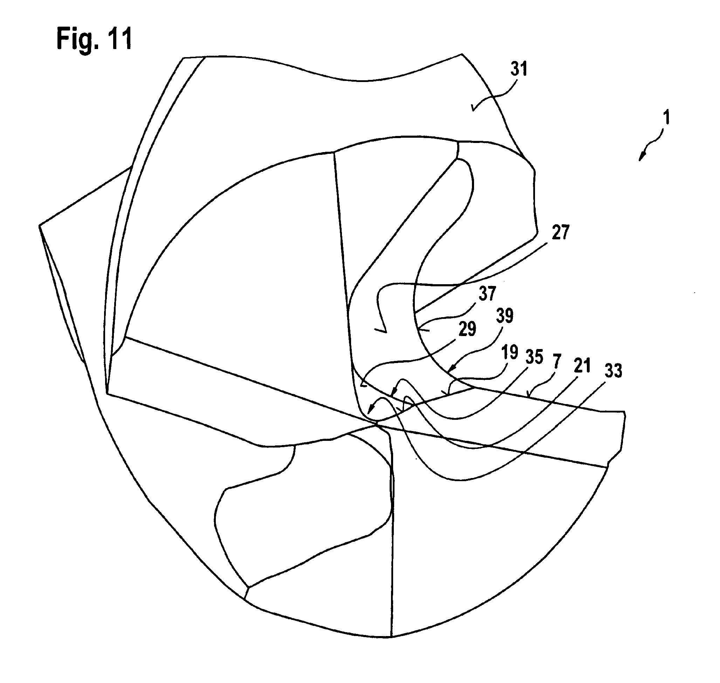

Figur 11 zeigt eine Ansicht des Bohrers 1 gemäß Figur 3, wobei die Blickrichtung des Betrachters in Richtung einer seitlichen Begrenzungsfläche 37 gewählt ist, die der Spanfläche 7 zugeordnet ist. Gleiche und funktionsgleiche Elemente sind mit gleichen Bezugszeichen versehen, sodass insofern auf die vorangegangene Beschreibung verweisen wird. Auch die seitliche Begrenzungsfläche 37 schließt mit der Längsachse 13, die hier aus Übersichtlichkeitsgründen nicht dargestellt ist, einen vorzugsweise spitzen Winkel ein. Dieser Winkel ist vorzugsweise kleiner als die Winkel, die die seitliche Begrenzungsflächen 27 und 29 mit der Längsachse 13 einschließen. Dies ist daran erkennbar, dass in den Figuren 9 und 10 die seitliche Begrenzungsfläche 37 nicht sichtbar ist. Wird der Bohrer 1 allerdings von der in Figur 10 dargestellten Orientierung ausgehend, in der die seitliche Begrenzungsfläche 29 sichtbar ist, in seine in Figur 11 dargestellte Orientierung verschwenkt, wird die seitliche Begrenzungsfläche 27 sichtbar. In Figur 11 sind also die seitlichen Begrenzungsflächen 27 und 29 sichtbar, die demnach einen größeren Winkel mit der Längsachse 13 einschließen als die seitliche Begrenzungsfläche 37.

Die vorzugsweise spitzen Winkel, die die seitlichen Begrenzungsflächen 27, 29, 37 mit der Längsachse 13 des Bohrers 1 jeweils einschließen, nehmen also vorzugsweise mit zunehmendem radialen Abstand der ihnen zugeordneten Span- beziehungsweise Teilflächen 7, 19, 21 zur Längsachse 13 des Bohrers 1 ab. Dies hat zur Folge, dass die Spanabfuhr aus dem Zentrumsbereich in Vergleich zu herkömmlichen Bohrern deutlich verbessert ist.

Aus Figur 11 wird noch deutlich, dass bei dem dargestellten Ausführungsbeispiel vorzugsweise auch ein Übergang 39 zwischen der Spanfläche 7 und der seitlichen Begrenzungsfläche 37 verrundet ausgebildet ist. Der Radius der Verrundung im Bereich des Übergangs 39 ist dabei vorzugsweise größer als der Radius im Bereich der Verrundungen 33 und 35.

Besonders bevorzugt weisen die Verrundungen der Übergänge 33, 35, 39 mit zunehmendem radialen Abstand der einem Übergang 33, 35, 39 zugeordneten Span- beziehungsweise Teilfläche 7, 19, 21 von der Längsachse 13 des Bohrers 1 einen zunehmenden Radius auf. Hierdurch kann sich die von den Schneiden 3, 23, 25 abgetragenen Späne in der Form eines Kegels einrollen, was beim Bohren die günstigste Spanform darstellt. Die erfindungsgemäße Bohrergeometrie verbessert also nicht nur die Abfuhr der Späne, sondern verleiht diesen auch eine besonders günstige Form.

Bevorzugt können auch die Übergänge zwischen den Span- beziehungsweise Teilflächen 7, 19, 21 jeweils verrundet ausgebildet sein. Bei einem besonders bevorzugten Ausführungsbeispiel sind auch Übergänge zwischen der Hauptschneide 3 und der Zentrumsschneide 15 beziehungsweise zwischen der Hauptschneide 3 und der Teilschneide 23 beziehungsweise zwischen dieser und der Teilschneide 25 verrundet ausgebildet.

Selbstverständlich gilt das hier in Zusammenhang mit den Figuren 9 bis 11 Gesagte genauso für jede andere Hauptschneide 3, 3' eines Bohrers 1, in deren Bereich eine mindestens zweifache Ausspitzung vorgesehen ist. Auf die Erwähnung der gestrichenen Bezugszeichen wurde hier also lediglich aus Gründen der übersichtlichen Darstellung verzichtet.

Bei anderen, nicht dargestellten Ausführungsbeispielen ist es auch möglich, die Winkel der seitlichen Begrenzungsflächen 27, 29, 37 anders, insbesondere im Bereich jeder Hauptschneide 3, 3' mit mindestens zwiefacher Ausspitzung verschieden zu wählen. Das gleiche gilt selbstverständlich auch für die Verrundungen beziehungsweise Verrundungsradien im Bereich der Übergänge 33, 35, 39. Bei wieder einem anderen Ausführungsbeispiel ist es auch möglich, dass die Span- beziehungsweise Teilflächen 7, 19, 21 nicht verrundet in die ihnen zugeordneten seitlichen Begrenzungsflächen 27, 29, 37 übergehen, sondern dass im Bereich der Übergänge 33, 35, 39 Unstetigkeitsstellen beziehungsweise Kanten vorgesehen sind.

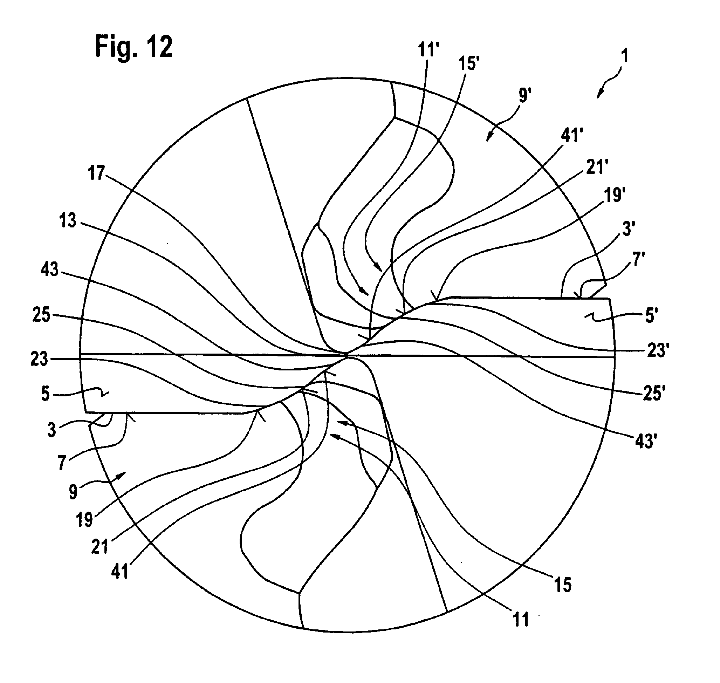

Figur 12 zeigt ein zweites Ausführungsbeispiel eines erfindungsgemäßen Bohrers 1. Gleiche und funktionsgleiche Elemente sind mit gleichen Bezugszeichen versehen, sodass insofern auf die vorangegangene Beschreibung verwiesen wird. Der dargestellte Bohrer 1 weist drei Ausspitzungen auf. Die den Zentrumsschneiden 15, 15' zugeordneten Spanflächen 11, 11' weisen hier also drei Teilflächen auf. Die Spanfläche 11 umfasst die Teilflächen 19, 21 und 41, und die Spanfläche 11' umfasst die Teilflächen 19', 21' und 41'. Jede der Teilflächen 19, 19', 21, 21', und 41, 41' umfasst wiederum eine Schnittlinie mit den Freiflächen 5, 5', sodass die Zentrumsschneiden 15, 15' drei Teilschneiden 23, 23', 25, 25' und 43, 43' umfassen.

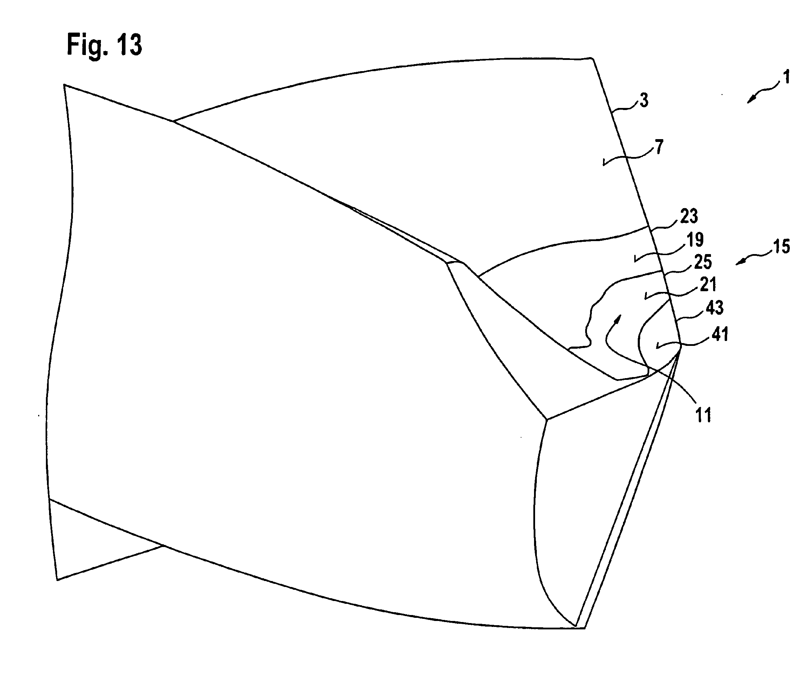

Figur 13 zeigt eine Seitenansicht des Bohrers 1 gemäß Figur 12. Hier sind die Teilflächen 19, 21 sowie 41 dargestellt, die gemeinsam die Spanfläche 11 der Zentrumsschneide 15 bilden. Gleichzeitig ist erkennbar, dass diese drei Teilschneiden 23, 25 und 43 umfasst. Außerdem ist die Hauptschneide 3 mit der ihr zugeordneten Spanfläche 7 dargestellt.

Es ist offensichtlich, dass für den Bohrer gemäß den Figuren 12 und 13 alle Merkmale vorgesehen sein können, die in Zusammenhang mit dem Bohrer gemäß Figur 3 erläutert wurden. Insbesondere verhalten sich die Spanwinkel, die den Haupt- beziehungsweise Teilschneiden 3, 23, 25, 43 zugeordnet sind, wie es in Zusammenhang mit den Figuren 6 bis 8 erläutert wurde. In diesem Fall ist vorzugsweise also zumindest der Teilschneide 43 ein negativer Spanwinkel zugeordnet. Der Spanwinkel vergrößert sich dann radial nach außen über die Teilschneide 25 und die Teilschneide 23 bis hin zur Hauptschneide 3. Insbesondere kann vorzugsweise auch der Spanfläche 25 noch ein negativer Spanwinkel zugeordnet sein, dessen absoluter Betrag dann aber bevorzugt kleiner ist als der absolute Betrag des negativen Spanwinkels, der der Teilfläche 43 zugeordnet ist. Bei einem anderen Ausführungsbeispiel ist es selbstverständlich möglich, dass der Teilschneide 25 bereits ein positiver Spanwinkel zugeordnet ist.

Der Spanfläche 7 und den Teilflächen 19, 21, 41 sind vorzugsweise auch seitliche Begrenzungsflächen zugeordnet, die besonders bevorzugt Merkmale aufweisen, die in Zusammenhang mit den Figuren 9 bis 11 erläutert wurden.

Wie bereits gesagt, sind auch Ausführungsbeispiele möglich, die mehr als drei Ausspitzungen aufweisen. Auch bei diesen Ausführungsbeispielen sind vorzugsweise sinngemäß die in Zusammenhang mit den Figuren 3 bis 11 beschriebenen Merkmale verwirklicht.

Es zeigt sich noch, dass die hier beschriebenen Merkmale in Zusammenhang mit Bohrern 1 verwirklicht sein können, die beliebig viele Hauptschneiden 3, 3' aufweisen. So können bei einem Bohrer 1 mit einer einzigen Hauptschneide 3 mindestens zwei Ausspitzungen vorgesehen sein, ein anderes Ausführungsbeispiel kann aber auch mehr als zwei Hauptschneiden 3, 3' aufweisen, wobei an mindestens einer Hauptschneide, an einigen Hauptschneiden oder auch an allen Hauptschneiden mindestens zwei Ausspitzungen vorgesehen sein können. Es ist auch möglich, im Bereich verschiedener Hauptschneiden verschieden viele Ausspitzungen vorzusehen.

Als besonders vorteilhaft erweist sich die erfindungsgemäße Bohrergeometrie im Zusammenhang mit Vollhartmetallbohrern oder Hochleistungs-Hochgeschwindigkeitsstahl-Bohrern. Trotzdem ist für den Fachmann offensichtlich, dass die erfindungsgemäße Geometrie auch bei anderen Bohrern vorgesehen werden kann. Insbesondere können hier Bohrer angesprochen sein, die einen Grundkörper und mindestens eine an diesem angeordnete Hartmetallschneide aufweisen. Die Hartmetallschneide kann vorzugsweise mit dem Grundkörper verlötet, verklebt oder an diesen angeschraubt sein.

Es zeigt sich auch noch, dass die zwei oder mehr Ausspitzungen vom Zentrum des Bohrers aus gesehen radial in Richtung auf die Umfangsfläche 31 hin vorzugsweise mit jeweils einem kleineren Winkel zur Längsachse 13 des Bohrers 1 in diesen eingebracht werden.

Die Spanwinkel der äußeren Teilschneiden sind jeweils größer als die der weiter innen liegenden. Zusammen mit der vorteilhaften Geometrie der seitlichen Begrenzungsflächen und den vorzugsweise verrundeten Übergängen zwischen den Span- beziehungsweise Teilflächen und den seitlichen Begrenzungsflächen wird so eine ausreichende Stabilität der Schneiden im Bereich des Zentrums und ein effizienter Spanabtransport im Bereich höherer Schnittgeschwindigkeit erzielt. Insbesondere werden die Späne günstig geformt, nämlich kegelförmig eingerollt, sodass sie optimal abfließen können.

Insgesamt zeigt sich, dass die erfindungsgemäße Bohrergeometrie mit zunehmendem Abstand von Zentrum und somit zunehmender Schnittgeschwindigkeit zunehmend schnittfreudigere Schneiden bei gleichzeitig hoher Stabilität im Bereich des Zentrums bereitstellt. Es wird außerdem eine sehr günstige Spanform und eine optimale Späneabfuhr gewährleistet.

## Patentansprüche

1. Bohrer mit mindestens einer Hauptschneide (3,3') und mindestens einer Zentrumsschneide (15,15'), wobei der Bohrer (1) eine Längsachse (13) aufweist, und wobei der mindestens einen Hauptschneide (3,3') und der mindestens einen Zentrumsschneide (15,15') jeweils eine Spanfläche (7,7';11,11') zugeordnet ist, und wobei die der mindestens einen Zentrumsschneide (15,15') zugeordnete Spanfläche (11,11') mindestens zwei Teilflächen (19,19';21,21';41,41') aufweist, die - senkrecht zur Längsachse (13) des Bohrers (1) gesehen - einen stumpfen Winkel miteinander einschließen, sodass die mindestens eine Zentrumsschneide (15,15') mindestens zwei Teilschneiden (23,23';25,25';43,43') umfasst, **dadurch gekennzeichnet, dass** der Hauptschneide (3,3') und den mindestens zwei Teilschneiden (19,19';21,21';41,41') der Zentrumsschneide (15,15') jeweils ein Spanwinkel zugeordnet ist, dessen Wert mit zunehmendem radialen Abstand der zugeordneten Haupt- beziehungsweise Teilschneide (3,3';23,23';25,25';43,43') zu Längsachse des Bohrers (1) zunimmt.

2. Bohrer nach Anspruch 1, **dadurch gekennzeichnet, dass** der Spanfläche (7,7') der Hauptschneide (3,3') und den mindestens zwei Teilflächen (19,19';21;21';41;41') der Spanfläche (11,11') der Zentrumsschneide (15,15') jeweils eine seitliche Begrenzungsfläche (27,29,37) zugeordnet ist.

3. Bohrer nach Anspruch 2, **dadurch gekennzeichnet, dass** die Spanfläche (7,7') beziehungsweise Teilflächen (19,19';21;21';41;41') mit den ihnen jeweils zugeordneten seitlichen Begrenzungsflächen (27,29,37) jeweils verschiedene Winkel einschließen.

4. Bohrer nach Anspruch 3, **dadurch gekennzeichnet, dass** die von der Spanfläche (7,7') beziehungsweise den Teilflächen (19,19';21;21';41;41') mit den ihnen jeweils zugeordneten seitlichen Begrenzungsflächen (27,29,37) eingeschlossenen Winkel Werte zwischen 60° und 140°, vorzugsweise 70° und 130°, und in besonders bevorzugter Weise zwischen 80° und 120° annehmen.

5. Bohrer nach Anspruch 4, **dadurch gekennzeichnet, dass** die Winkel ungefähr 100° betragen.

6. Bohrer nach Anspruch 2, **dadurch gekennzeichnet, dass** die seitlichen Begrenzungsflächen (27,29,37) mit der Längsachse (13) des Bohrers (1) jeweils einen spitzen Winkel einschließen, dessen Wert mit zunehmendem radialen Abstand der den seitlichen Begrenzungsflächen (27,29,37) zugeordneten Span- beziehungsweise Teilflächen (7,7';19,19';21;21';41;41') zur Längsachse (13) des Bohrers (1) abnimmt.

7. Bohrer nach Anspruch 1, **dadurch gekennzeichnet, dass** zumindest der der am nächsten zur Längsachse (13) des Bohrers (1) angeordneten Teilschneide (19,19';21;21';41;41') zugeordnete Spanwinkel einen negativen Wert aufweist.

8. Bohrer nach Anspruch 2, **dadurch gekennzeichnet, dass** Übergänge zwischen den Span- beziehungsweise Teilflächen (7,7';19,19';21;21';41;41') und den seitlichen Begrenzungsflächen (27,29,37) verrundet ausgebildet sind.

9. Bohrer nach Anspruch 8, **dadurch gekennzeichnet, dass** die Verrundungen der Übergänge mit zunehmendem radialen Abstand der einem Übergang zugeordneten Span- beziehungsweise Teilfläche (7,7';19,19';21;21';41;41') von der Längsachse (13) des Bohrers (1) einen zunehmenden Radius aufweisen.

10. Bohrer nach Anspruch 1, **dadurch gekennzeichnet, dass** Übergänge zwischen der Hauptschneide (3,3') und der Zentrumsschneide (15,15') beziehungsweise zwischen den mindestens zwei Teilschneiden (23,23';25;25';43;43') der Zentrumsschneide (15,15') verrundet ausgebildet sind.

11. Bohrer nach Anspruch 1, **dadurch gekennzeichnet, dass** die der mindestens einen Zentrumsschneide (15,15') zugeordnete Spanfläche (11,11') mindestens drei Teilflächen (19,19';21;21';41;41') aufweist, so dass die mindestens eine Zentrumsschneide (15,15') mindestens drei Teilschneiden (23,23';25,25';43,43') umfasst.

## Claims

1. Drill bit with at least one main cutting edge (3, 3') and at least one center cutting edge (15, 15'), wherein the drill bit (1) has a longitudinal axis (13) and wherein a rake face (7, 7'; 11, 11') is assigned to the at least one main cutting edge (3, 3') and to the at least one center cutting edge (15, 15'), respectively, wherein the rake face (11, 11') assigned to the at least one center cutting edge (15, 15') has at least two partial faces (19, 19'; 21, 21'; 41, 41') that - seen perpendicular to the longitudinal axis (13) of the drill bit (1) - form an obtuse angle with each other so the at least one center cutting edge (15, 15') comprises at least two partial cutting edges (23, 23'; 25, 25'; 43, 43'), **characterized in that** a rake angle is assigned to the main cutting edge (3, 3') and to the at least two partial cutting edges (19, 19'; 21, 21'; 41, 41') of the center cutting edge (15, 15'), respectively, that has a value that increases with increasing radial distance of the assigned main cutting edge and/or partial cutting edge (3, 3'; 23, 23'; 25, 25'; 43, 43') with respect to the longitudinal axis of the drill bit (1).

2. Drill bit according to claim 1, **characterized in that** a lateral boundary surface (27, 29, 37) is assigned to the rake face (7, 7') of the main cutting edge (3, 3') and to the at least two partial faces (19, 19'; 21, 21'; 41, 41') of the rake face (11, 11') of the center cutting edge (15, 15').

3. Drill bit according to claim 2, **characterized in that** the rake face (7, 7') and/or the partial faces (19, 19'; 21, 21'; 41, 41') each form different angles with each of the lateral boundary surfaces (27, 29, 37) assigned to them.

4. Drill bit according to claim 3, **characterized in that** the angles formed by the rake face (7, 7') and/or the partial faces (19, 19'; 21, 21'; 41, 41') with the lateral boundary surfaces (27, 29, 37) assigned to them, respectively, assume values between 60° and 140°, preferably 70° and 130° and in an especially preferred manner between 80° and 120°.

5. Drill bit according to claim 4, **characterized in that** the angles are approximately 100°.

6. Drill bit according to claim 2, **characterized in that** the lateral boundary surfaces (27, 29, 37) each form an acute angle with the longitudinal axis (13) of the drill bit (1), the value of which decreases with increasing radial distance of the rake and/or partial faces (7, 7'; 19, 19'; 21, 21'; 41, 41') assigned to the lateral boundary surfaces (27, 29, 37) to the longitudinal axis (13) of the drill bit (1).

7. Drill bit according to claim 1, **characterized in that** at least the rake angle assigned to the partial cutting edge (19, 19'; 21, 21'; 41, 41') arranged next with respect to the longitudinal axis (13) of the drill bit (1) has a negative value.

8. Drill bit according to claim 2, **characterized in that** transitions between the rake and/or partial faces (7, 7'; 19, 19'; 21, 21'; 41, 41') and the lateral boundary surfaces (27, 29, 37) are designed so they are rounded.

9. Drill bit according to claim 8, **characterized in that** the roundings of the transitions have an increasing radius with increasing radial distance of the rake and/or partial face (7, 7'; 19, 19'; 21; 21'; 41; 41') assigned to a transition from the longitudinal axis (13) of the drill bit (1).

10. Drill bit according to claim 1, **characterized in that** transitions between the main cutting edge (3, 3') and the center cutting edge (15, 15') and/or between the at least two partial cutting edges (23, 23'; 25, 25'; 43, 43') of the center cutting edge (15, 15') are designed so they are rounded.

11. Drill bit according to claim 1, **characterized in that** the rake surface (11, 11') assigned to the at least one center cutting edge (15, 15') has at least three partial faces (19, 19'; 21; 21'; 41; 41') so that the at least one center cutting edge (15, 15') has at least three partial cutting edges (23, 23'; 25, 25'; 43, 43').

## Revendications

1. Foret comprenant au moins une lame principale (3, 3') et au moins une lame centrale (15, 15'), le foret (1) présentant un axe longitudinal (13), et une face de coupe (7, 7' ; 11, 11') étant respectivement associée à l'au moins une lame principale (3, 3') et l'au moins une lame centrale (15, 15'), la face de coupe (11, 11') associée à l'au moins une lame centrale (15, 15') présentant au moins deux faces partielles (19, 19' ; 21, 21' ; 41, 41') qui forment entre elles un angle obtus - sur une vue perpendiculaire à l'axe longitudinal (13) du foret (1) - de telle sorte que l'au moins une lame centrale (15, 15') comprend au moins deux lames partielles (23, 23' ; 25, 25' ; 43, 43'), **caractérisé en ce qu'**un angle de coupe est respectivement associé à la lame principale (3, 3') et aux au moins deux lames partielles (19, 19' ; 21, 21' ; 41, 41') de la lame centrale (15, 15'), la valeur de l'angle augmentant en même temps qu'augmente la distance radiale entre la lame principale et/ou lame partielle (3, 3' ; 23, 23' ; 25, 25' ; 43, 43') et l'axe longitudinal du foret (1).

2. Foret selon la revendication 1, **caractérisé en ce qu'**une face latérale de délimitation (27, 29, 37) est respectivement associée à la face de coupe (7, 7') de la lame principale (3, 3') et aux au moins deux faces partielles (19, 19' ; 21, 21' ; 41, 41') de la face de coupe (11, 11') de la lame centrale (15, 15').

3. Foret selon la revendication 2, **caractérisé en ce que** la face de coupe (7, 7') et/ou les faces partielles (19, 19' ; 21, 21' ; 41, 41') respectivement forment des angles différents avec les faces latérales de délimitation (27, 29, 37) respectivement associées avec elles.

4. Foret selon la revendication 3, **caractérisé en ce que** les angles respectivement formés entre la face de coupe (7, 7') et/ou les faces partielles (19, 19' ; 21, 21' ; 41, 41') et les faces latérales de délimitation (27, 29, 37) respectivement associées avec elles prennent des valeurs entre 60° et 140°, de préférence entre 70° et 130°, et plus préférablement entre 80° et 120°.

5. Foret selon la revendication 4, **caractérisé en ce que** lesdits angles sont environ 100°.

6. Foret selon la revendication 2, **caractérisé en ce que** les faces latérales de délimitation (27, 29, 37) respectivement forment un angle aigu avec l'axe longitudinal (13) du foret (1), la valeur de l'angle diminuant en même temps qu'augmente la distance radiale entre les faces de coupe et/ou partielles (7, 7'; 19, 19' ; 21, 21' ; 41, 41') associées aux faces latérales de délimitation (27, 29, 37) et l'axe longitudinal (13) du foret (1).

7. Foret selon la revendication 1, **caractérisé en ce qu'**au moins l'angle de coupe associé à la lame partielle (19, 19' ; 21, 21' ; 41, 41') disposée la plus proche de l'axe longitudinal (13) du foret (1) présente une valeur négative.

8. Foret selon la revendication 2, **caractérisé en ce que** des transitions entre les faces de coupe et/ou partielles (7, 7' ; 19, 19' ; 21, 21' ; 41, 41') et les faces latérales de délimitation (27, 29, 37) sont configurées de manière arrondie.

9. Foret selon la revendication 8, **caractérisé en ce que** les arrondis des transitions présentent un rayon augmentant en même temps qu'augmente la distance radiale entre la face de coupe et/ou partielle (7, 7' ; 19, 19' ; 21, 21'; 41, 41') associée à une transition et l'axe longitudinal (13) du foret (1).

10. Foret selon la revendication 1, **caractérisé en ce que** des transitions entre la lame principale (3, 3') et la lame centrale (15, 15') et/ou entre les au moins deux lames partielles (23, 23' ; 25, 25' ; 43, 43') de la lame centrale (15, 15') sont configurées de manière arrondie.

11. Foret selon la revendication 1, **caractérisé en ce que** la face de coupe (11, 11') associée à l'au moins une lame centrale (15, 15') présente au moins trois faces partielles (19, 19' ; 21, 21' ; 41, 41'), de telle sorte que l'au moins une lame centrale (15, 15') comprend au moins trois lames partielles (23, 23' ; 25, 25' ; 43, 43').
